# EUROPEAN PATENT SPECIFICATION

(11) **EP 3 279 982 B1**
(45) Date of publication and mention of the grant of the patent: **15.05.2019**
(21) Application number: 16183015.3
(22) Date of filing: 05.08.2016
(51) Int. Cl.: H01M 4/66, H01M 4/70, H01M 2/16, H01M 10/052

(54) **CURRENT COLLECTOR WITH AN IMPROVED SECURITY BEHAVIOR AND BATTERY CELL COMPRISING THE SAME**
STROMABNEHMER MIT VERBESSERTEM SICHERHEITSVERHALTEN UND BATTERIEZELLE DAMIT
COLLECTEUR DE COURANT PRÉSENTANT UN MEILLEUR COMPORTEMENT DE SÉCURITÉ ET CELLULE DE BATTERIE COMPRENANT CELUI-CI

(43) Date of publication of application: 07.02.2018
(73) Proprietor: Robert Bosch GmbH, 70442 Stuttgart (DE)
(72) Inventor: Deromelaere, Gaetan, 70806 Kornwestheim (DE); Konishi, Daisuke, 70191 Stuttgart (DE); Friedrich, Marco, 71638 Ludwigsburg (DE); Klinsmann, Markus, 70195 Stuttgart (DE); Ashida, Yuji, 70191 Stuttgart (DE); Katsumata, Yutaro, Kyoto, 602-8072 (JP)
(74) Representative: Bee, Joachim

(56) References cited:
- EP-A1- 1 318 557
- US-A- 2 503 970
- US-A1- 2015 104 712

## Description

The present invention relates to a current collector which shows an improved security behavior. The present invention further relates to battery cell comprising such a current collector and to an electrochemical energy storage device, in particular a battery, such as a lithium ion battery, comprising such a current collector and/or such a battery cell.

### State of the art

Electrochemical energy storing devices, such as lithium ion batteries, are known and used in wide application areas. Li-ion batteries are vital energy storage devices due to their high specific energy density. They are predominantly used in consumer electronics; however, improvements in safety are required for full acceptance of Li-ion cells in transportation applications, such as electric vehicles.

US 2004/0161667 A1 describes a bipolar battery comprising: a plurality of bipolar electrodes; electrolyte layers formed between adjacent ones of the plurality of bipolar electrodes, respectively; sealing portions surrounding and sealing the electrolyte layers, respectively; and contributing members contributing to keeping gaps between the adjacent ones of the plurality of bipolar electrodes, respectively.

US 2008/0020271 A1 describes a negative electrode for a non-aqueous electrolyte secondary battery, including: an active material layer capable of electrochemically absorbing and desorbing at least Li; and a current collector sheet that supports the active material layer thereon and that does not react with Li, wherein the active material layer includes a plurality of deposited films or sintered films supported on a surface of the current collector sheet, and each of the deposited films or sintered films is provided with at least one groove formed in a side surface thereof, the groove extending from a top surface side towards the current collector sheet side thereof.

US 2011/0014510 A1 describes a positive electrode including a positive electrode current collector lead connected to a core exposed part formed at a longitudinal center of a current collector core. A negative electrode includes a double-coated part including an active material layer and a porous protective film formed on each surface of a current collector core, a core exposed part, and a single-coated part which is located between the double-coated part and the core exposed part, and includes the active material layer and the porous protective film formed only on one of the surfaces of the current collector core. A plurality of grooves are formed in each surface of the double-coated part, while the grooves are not formed in the single-coated part. A negative electrode current collector lead is connected to the core exposed part; The negative electrode is wound in such a manner that the core exposed part constitutes a last wound end.

JP 2014-154486 A describes that in a power storage device, a conductive plate group is arranged between a case and an electrode assembly, and insulating convex spacers are scattered between a first conductive plate on the case side and a second conductive plate on the electrode assembly side. By means of the spacers, the first conductive plate and second conductive plate are brought into a state separated with a cavity formed by the spacers, and when being collapsed with a rod, or the like, the first conductive plate on the case side flexes to the second conductive plate side thus causing short circuit of the first conductive plate and second conductive plate reliably.

JP2010-044896 A describes a power storage device, wherein a plurality of slits passing through in the thickness direction are formed in a positive current collector and a negative current collector. A plurality of regions are partitioned in the positive current collector and the negative current collector by the slits. A part between the regions, and between the regions are cut off by the slits, EP1318557A1 discloses a current collector for a battery cell.

### Disclosure of the invention

The present invention is defined by the subject-matter of the appended claims and relates to a current collector for a battery cell, the current collector comprising a main area for connecting the current collector to a layer of active material, wherein a plurality of orifices is provided in the main area, the orifices being arranged in a plurality of orifice strings, wherein the orifice strings define current paths between them, characterized in that at least two orifice strings proceed in a varying distance to each other, wherein a plurality of electrically insulating spacer elements is provided attached to the current collector, the plurality of spacer elements being positioned in the main area of the current collector.

Such a current collector allows an improved security behavior of a battery being equipped with such a current collector in particular when being in use.

A current collector as such in known per se. It is a known part of a battery, or battery cell, respectively, and is generally positioned adjacent and connected to a layer of active material and may be used for electrically connecting the respective pole of the battery. As such, the current collector comprises a main area which is designed for connecting the current collector to a layer of active material. Therefore, in a battery, the main area of the current collector is positioned adjacent to an active material layer. For example, the main area may be coated with active material. Further, the current collector may comprise a connecting area which connecting area collects the current from the battery cell and may further be used for electrically connecting the current collector with a conductor, for externally connecting the battery cell, or the electrode being formed in part by the current collector, respectively. With this regard, the current collector, together with the active material, may form an electrode, be it an anode or a cathode. The current collecting area may be positioned e.g. directly adjacent to the main area and/or may be formed as one piece with the main area or it may be connected thereto.

A current collector as defined above is further formed such, that a plurality of orifices is provided in the main area. The orifices are arranged in a plurality of more than one orifice strings. In other words, the orifices are not spread in a free and particularly undefined manner at the main area, but the orifices are positioned and arranged in a defined pattern in order to form respective orifice strings. An orifice string may be formed as a straight line or as a curve or as shape locally forming a line and locally forming a curve, for example.

With this regard, orifices in the sense of the present invention shall particularly mean slit-like holes, so that, especially in contrast to grooves, a through-hole is provided in the position of the orifice.

It is further provided that the orifice strings define current paths between them. The current paths thus proceed in a corresponding orientation compared to the orifice strings bordering them.

It is further provided that at least two orifice strings proceed in a varying distance to each other. Such an arrangement as described before has significant advantages over the solutions known in the prior art.

In detail, especially the provision of respective orifice strings, such as orifice lines or orifice curves, respectively, allows an improved security behavior in case an object is introduced into the battery cell. Such a defect is generally imitated by the so-called nail penetration test. In general, such a defect may lead to significant effects in the working behavior of a battery. This is due to the fact that, for example the presence of a volatile, combustible electrolyte and an oxidizing agent, such as often in lithium oxide cathodes, makes such cells generally susceptible to fires and explosions. Internal shorts or mechanical damage, e.g. simulated by certain tests such as the nail penetration test, create local current paths over which the cell discharges. The corresponding electric currents are accompanied by a strongly localized Joule heating. This leads to a strong increase of the local temperature at the internal short or nail penetration location. When a critical temperature is reached, exothermic chemical reactions are initiated between the electrodes and the electrolyte, raising the cell's internal pressure and temperature even more. The increased temperature accelerates these chemical reactions, producing more heat. Therefore, such reactions may be hard to control and may cause serious damage of the battery cell.

Internal shorts are typically located between two current collector foils, i.e. in one layer of electrode material (cathode + anode + separator). However, if an internal short occurs, the entire cell, i.e. also other layers can be discharged through this single internal short by electrical conduction over the tabs or current collectors. A similar possibility exists during nail penetration when the damage within the electrode is not homogeneous throughout the layers, but instead leads to good electrical conduction, i.e. a low resistance at the damaged area around the nail, in some of the layers and bad contact in other layers.

It has been found that a current collector as described before allows the reduction of the current flowing from one electrode layer to the other. Thus, a measure to prevent catastrophic thermal failure in commercial batteries such as Li-ion batteries is therefore provided. In detail, the current flowing to the nail penetration area is significantly reduced, thereby reducing the danger occurring in connection with such a failure.

Further, the orifices reduce the current flowing from further current paths to the current path having the nail penetration in a direction perpendicular to the main direction of the current path due to the orifices.

Due to the fact that the orifice strings proceed in a varying distance to each other, it may further be provided that at a part of the current path where a comparably small distance between two orifice lines is provided, has a limited current carrying capability, such as in the range of ≥ 100 to ≤ 200 Amperes, per layer of the current collector, or with regard to each current collector, respectively, whereas a further part of the current path, which has a comparably large distance between two orifice strings, has a comparably large current carrying capability. The part having a comparably small current carrying capability may thus be used as a sacrificial region, which may melt in case a predetermined current flows through this passage of the current path. Therefore, it may be allowed that a defined part of the current path could be melted away by the large current from other electrode layers in case a predetermined distance between the orifice strings and thus a predetermined widths of the current path is reached. Consequently, the different electrode layers will become disconnected from each other and additional current from other electrode layers will be blocked.

This can be explained by the fact that the basic idea of a structured design of the current collectors with orifices such as slits in stacked layers that lead to a detachment of the layers when a high electric current flows. Therefore, a respective disconnection of the layers allows an effective measure against the above-described negative effects.

Further, the current path as such is interrupted, so that the current flowing to the nail penetration area from one current collector is significantly reduced, which further improves the security effect.

As a result, the risk of a hazardous event due to nail penetration could be reduced already without providing an additional measure, such as a fast discharge device.

Due to the orifices in the current collector, the current provided from the electrode material in some segments of a battery cell such as a jelly roll layer is hindered to flow towards the nail penetration location.

Regarding the design of orifices known in prior art, such solutions may especially be used in battery cells being arranged as wounded jelly rolls and may not or not advantageously work in stacked type electrodes due to the difference in the arrangement of the current collector and the cell tab. The arrangement as described above, however, has the advantage of showing optimized patterns on both current collectors for the jelly roll as well as for the stacked cell such that they lead to an effective detachment of the different layers when a high electric current flows around the tabs in a broad application range.

Apart from that, in case the current collector is part of a battery cell which is connected to a fast discharge device like it will be described in detail down below, the working behavior of said fast discharge device may not or at least not significantly be deteriorated which further enhances the security behavior of a battery being equipped with a current collector as described.

According to an embodiment, the current collector, next to the main area, comprises a connecting area, wherein the orifice strings proceed in the direction to the connecting area. Apart from the significant enhancement of the security behavior as described above, due to the fact that each orifice string, and thus the current paths, proceeds in the main area in the direction to the connecting area, the working behavior of the cell having a current collector as described above is not or at least nor significantly deteriorated as the electric resistance of the current flowing to the connecting area during normal use of the battery cell and thus towards the external current path is not or at least not significantly decreased. Therefore, especially this embodiment combines a high level of security with a good performance of the battery.

According to a further embodiment, the distance between at least two orifice strings, preferably the distance between all orifice strings continuously, decreases in the direction to the connecting area, particularly in case the orifice strings are formed as lines. Especially according to this embodiment but not limited thereto, it may be provided that the smallest distance is provided at the part being in direct vicinity to the connecting area, so that the sacrificial region is provided directly next to the connecting area. This allows an easy manufacturing process and further provides a high degree of adaptability, as the current path between each orifice and around and through the connecting area can be optimally narrowed according to the specific type of cell without any negative effect on the output DC resistance.

As a non-limiting example, the orifice strings may each proceed as a straight line and may be arranged start-shaped with regard to the current collecting area.

According to a further embodiment, each orifice string comprises a plurality of orifices. According to this embodiment, it may be provided that each orifice string is not formed by a single orifice, but that each string comprises a plurality of orifices. According to this embodiment, an effective security improvement may be reached, but the working behavior in a normal working state, i.e. in case no defect arises, is influenced in an especially small amount. The orifices provided may for example be formed slit-like or point-like. The distance between each orifice in a orifice string may be varied according to the specific application.

According to a further embodiment, the ratio of the length of an orifice to the distance between two orifices in one orifice string lies in the range of equal or more than 50 to 1 to equal or less the 200/1, preferably in the range of equal or more than 75 to 1 to equal or less the 150/1, such as in the range of equal or more than 85 to 1 to equal or less the 120/1. For example, the ratio of the length of an orifice to the distance between two orifices in one orifice string lies in the range of 100/1. This embodiment allows that a high stability is provided, thereby anyhow allowing to prevent, or reduce significantly, a current which flows in a direction perpendicular to the current path. This embodiment thus especially allows an especially significant reduction of current flowing to the nail penetration area from different current paths. Exemplarily, the distance between two orifices in an orifice string may lie at 0,2mm, whereas the orifices as such may have a length of 20mm. Alternatively, the distance between two orifices in an orifice string may lie at 0,4mm, whereas the orifices as such may have a length of 40mm. The above values particularly are valid for orifice strings in which the orifices have the same size and/or form and respective distances are positioned adjacent to such an orifice.

With regard to the distance between the orifice strings and thus the width of the respective current paths, it may be provided that this distance may lie in the range of ≥ 4 to ≤ 12 mm, such as ≥ 6 to ≤ 8 mm. This may allow that less current paths are destroyed by a melting step of the sacrificial region, so that even in case a failure occurs, the performance of the battery cell is deteriorated to a comparably small amount, only.

According to a further embodiment, the current collector is formed as a metal foil. This embodiment allows forming the current collector as described above in a very easy and cost-saving manner as orifices may be provided in a foil without problems, such as by cutting or stamping out, for example. Apart from that, such current collectors may be used and implemented in known batteries without problems so that manufacturing process of batteries using a current collector need not to be altered in a significant manner. The current collector may for example be formed from aluminum or copper, for example, depending, for example, on the electrode. Exemplarily but not limited to this embodiment, the connecting area may be formed as a conventional cell tab as it is generally known in the art.

For example but not exclusively in case the current collector is formed form copper or aluminum, it may be preferred that it has a thickness of ≥ 5 to ≤ 20µm, such as of ≥ 7 to ≤ 10µm. These thicknesses may allow a suitable current carrying capability in particular in combination with above named widths of the current paths. Apart from that, with regard to manufacturing the current collectors may be formed very easily such that slits are formed into the current collectors, such as by cutting.

It may for example be provided that the main area is completely provided with orifice strings and that the current collecting area is free of orifices. According to this, it may be provided that each part of the main area may be associated to a current path which is limited by respective orifice strings or to an orifice string, whereas no orifices are provided in the connecting area. According to this embodiment, the current collector and thus the battery cell being equipped therewith may be electrically contacted very efficiently at the connecting area and with an especially large current carrying capability, wherein further at the whole part of the main area a high security is given. Apart from that, it is generally possible in a very efficient manner even though not required that a battery equipped with a current collector as described before may be equipped with a fast discharge device like described in detail down below, which device profits by such connecting portion.

According to the present invention as defined in the appended claims, a plurality of electrically insulating spacer elements is provided attached to the current collector, the plurality of spacer elements being positioned in the main area of the current collector. In other words, the spacer elements are positioned such, that in a manufactured battery cell, the spacer elements are surrounded by, or embedded in, the active material. Preferably, the spacer elements are in direct contact with the active material and may have an electrical resistance being larger compared to the active material they are embedded in, or provided in, respectively.

Due to the fact that the main area, and thus at least the main area, is provided with a plurality of spacer elements, it becomes possible that in a case of a defect of a battery cell being equipped with said current collector and due to the presence of the spacer elements it may be prevented or the danger may at least be significantly reduced, that two current collectors having different polarity come into direct electrical contact to each other. The spacer elements thus prevent a direct contact of the different current collectors as it is provided that at least one spacer element is provided between the respective current collectors.

Therefore, the number, size and the position of the spacer elements in the main area should be chosen such, that in case of a failure, particularly in case of an object being introduced into the battery cell, which may be simulated by the so-called nail penetration test, the spacer elements prevent a direct contact of the current collectors, which in turn reduces the danger of a serious damage of the battery cell.

To summarize, a current collector as described before allows an effective measure for improving the security behavior of a battery equipped therewith by reducing the danger of a thermal runaway.

With regard to further technical features and advantages of the current collector as described above, it is referred to the description of the battery cell, the electrochemical energy storage device, the figures and the description of the figures.

The present invention further relates to a battery cell, comprising at least one current collector as described above, be it an anode or a cathode.

In detail, the battery cell may comprise a separator having a first side and a second side, wherein the first side of the separator is contacted to a first layer of active material and wherein the second side of the separator is connected to a second layer of active material, wherein a first current collector is positioned adjacent to the first layer of active material on the side being arranged opposite to the separator and wherein a second current collector is positioned adjacent to the second layer of active material on the side being arranged opposite to the separator. It may further be provided that at least one of the first current collector and the second current collector is a current collector like it is described in detail above.

Such a battery cell thus may comprise a layer structure which may be as follows: first current collector - first active material layer - separator - second active material layer - second current collector. The separator and the first and second layers of active material may be formed as it is generally known in the art for example for forming a lithium ion battery cell. With this regard, the first active material layer may be formed for acting as a cathode, whereas the second active material layer may be formed for acting as an anode.

The first current collector and/or the second current collector may be formed as it is described in detail above.

The battery cell may be formed as a so-called jelly roll or wounded type cell, respectively, or it may have a stacked arrangement, for example.

Such a battery cell may thus provide an improved security behavior and may thus prevent or at least significantly reduce the danger of a thermal runaway for example in case an object is inserted into the cell structure.

With regard to further technical features and advantages of the battery cell as described above, it is referred to the description of the current collector, the electrochemical energy storage device, the figures and the description of the figures.

The present invention further relates to an electrochemical energy storage device, comprising at least one of a current collector like it is described in detail above and a battery cell like it is described in detail above.

Such an electrochemical energy storage device may for example be a battery or a battery module, which comprises, in particular as main unit, a battery cell like described above. Thus, it may for example be a lithium ion battery.

According to an embodiment, it may be advantageous the battery cell being part of the electrochemical energy storage device is connected to a fast discharge device. This embodiment allows an even more improved security behavior.

Such a fast discharge device may for example comprise an electrical connection being provided between the anode and the cathode of the battery, wherein the electrical connection has a defined electrical resistance. The electrical connection preferably is provided external to the battery cell and thus not through the active material layers. The discharge current which flows through the electrical connection is thus defined by the electrical resistance of this electrical connection. The electrical connection of the fast discharge device preferably may not be operated during a normal and thus desired working mode of the battery, but it may be switched such, that it electrically connects the anode with the cathode in case a failure appears. Such a failure may for example be determined by measuring the temperature inside the battery or the battery cell or by measuring the current flowing through the battery or the battery cell in answer to which a switch is activated for activating the fast discharge device.

Such a fast discharge device may thus allow that in case a high discharge current flowing there through, the temperature at the current collectors rise. This will trigger the sacrificial regions at the current paths to melt because of which a thermal runaway is prevented or the danger of a thermal runaway to occur is at least significantly lowered.

In other words, by defining and adapting the fast discharge device, the temperature inside the battery and thus at the current collectors may be regulated such, that the current collectors securely and effectively realize their security function like described above and thus prevent dangerous effects to appear.

The resistance in the electrical connection may be adapted to the specific application in that it has a current carrying capability in dependence of the desired temperature rise for letting the security effect of the current collector be activated.

According to this embodiment, an additional measure is provided in order to prevent thermal failure in commercial Li-ion batteries by the reduction of the localized current around the nail or internal short by an external low ohmic current path, the so called fast discharge device.

An electrochemical storage device as described above may thus provide an improved security behavior and may thus prevent or at least significantly reduce the danger of a thermal runaway for example in case an object is inserted into the cell structure.

With regard to further technical features and advantages of the electrochemical energy storage device as described above, it is referred to the description of the current collector, the battery cell, the figures and the description of the figures.

### Figures

Further advantages and embodiments of the subject-matters as described herein are described in the figures and the following description of the figures, wherein the features described may be part of the invention alone or in any combination, insofar it is not excluded due to the invention as claimed in the appended claims. It has to be noted that the figures are of illustrative purpose, only, and are not meant to restrict the present subject-matters.
Fig. 1 shows a schematical view of a battery cell according to the prior art;
Fig. 2 shows a schematical view of the battery cell according to figure 1 after a nail penetration;
Fig. 3 shows a schematical view of a current collector;
Fig. 4 shows a schematical view of the advantage of the current collector according to figure 3;
Fig. 5 shows details of an embodiment of a current collector;
Fig. 6 shows further details of a further embodiment of a current collector; and
Fig. 7 shows an embodiment of a current collector according to the invention.

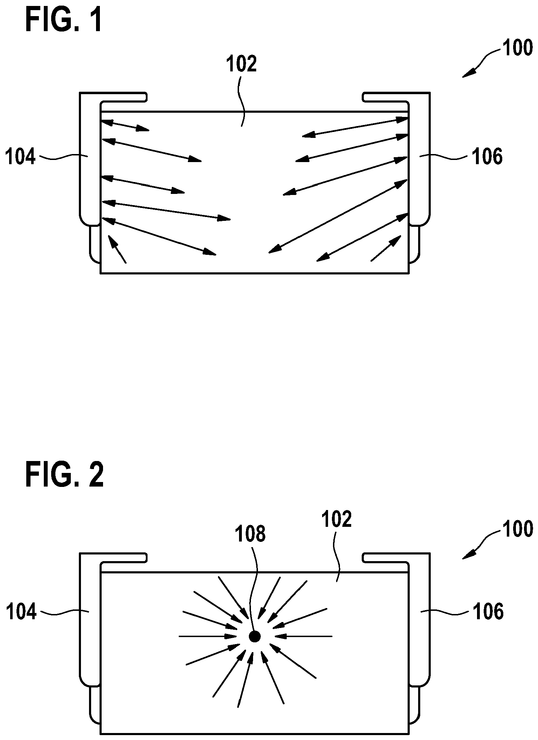

According to figure 1, a battery cell 100 according to the prior art is shown. It is shown that the current flows through the whole current collector 102 between the battery electrodes 104, 106.

Figure 2 shows the effect in case a nail 108 penetrates into the battery cell 100. According to figure 2, the current flowing towards the nail penetration location is provided by the entire current collector surrounding this location, as shown by the arrows.

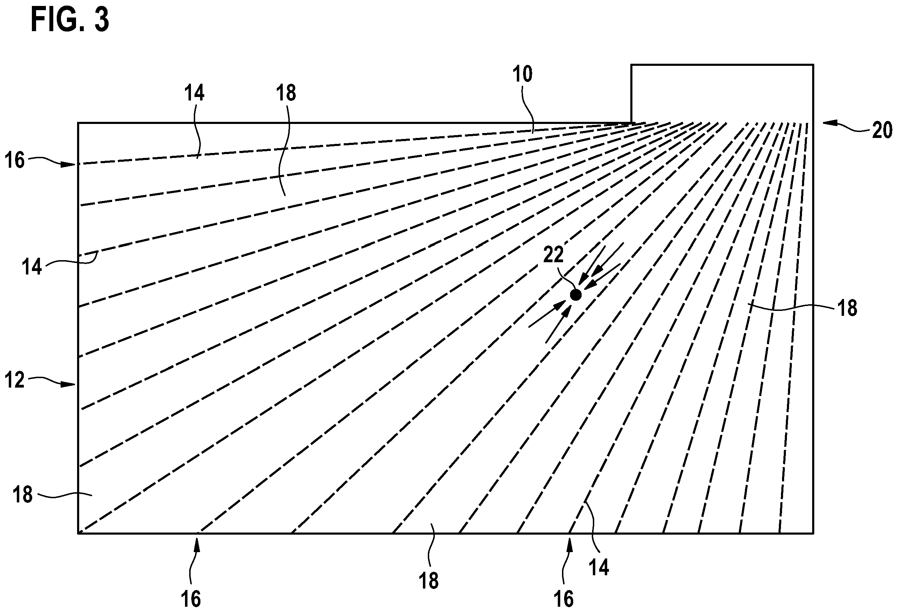

In contrast to this embodiment of figures 1 and 2, respectively, figure 3 shows an embodiment which does not fall under the scope of the present invention as claimed in the appended claims. According to figure 3 it is shown that the current collector 10 comprises a main area 12 for connecting the current collector 10 to a layer of active material, wherein a plurality of orifices 14 is provided in the main area 12, the orifices 14 being arranged in a plurality of orifice strings 16. Each orifice string 16 comprises a plurality of orifices 14 and the orifice strings 16 define current paths 18 between them.

It is further provided that at least two orifice strings 16 proceed in a varying distance to each other. In detail, it is shown that the current collector 10, next to the main area 12, comprises a connecting area 20, wherein the orifice strings 16 proceed in the direction to the connecting area 20. The distance between at least two orifice strings 16 decreases continuously in the direction to the connecting area 20. As in the case of the current collector with orifices such as in a wounded jell roll, the internal resistance of the battery cell during ordinary operation and, optionally, the total resistance of the fast discharge current path is not affected significantly by the orifices 14.

In case of a penetration of a nail 22, the total resistance of two separate current paths 18, starting at two different locations of the electrode layer and ending both at the nail 22, is equal if the location of the corresponding electrode material is at the same distance to the nail. In contrast to this general assumption and according to the present invention, however, if the current collector foils are structured by orifices 14, flow of electric current towards the nail 22 from different current paths 18 is hampered if the respective electrode material, providing this current, is not located in the same current path 18 of the structured current collector 10. Therefore, the current flowing to the nail penetration area is significantly lowered.

While the direction of current flow is unconstrained in ordinary current collector foils, it has to follow the current paths 18 provided by the structuring through orifices in the current collector 10. However, since the electric current already points to the largest part in direction of the smallest distance to the current collectors 10, the impact is not as big as for the current flowing towards the nail penetration location.

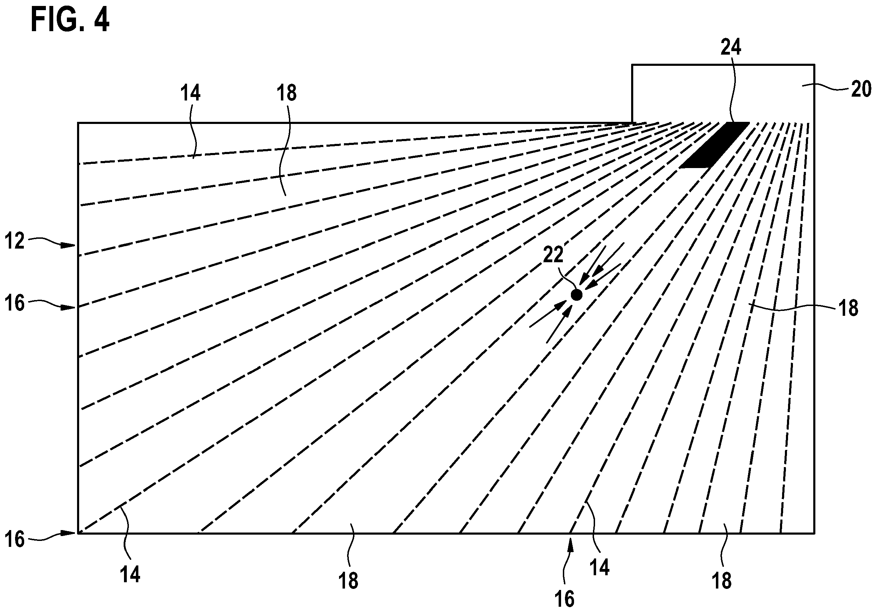

However, even though the current crossing the orifice strings 16 and thus flow to the nail penetration area directly is significantly reduced, often it cannot always be prevented the current flows via the connecting area 20 and thus enters the nail penetration area, like indicated by the arrows. According to the present invention, this effect can significantly be reduced like it is shown in figure 4.

Figure 4 shows a current collector 10 such as a foil of an electrode. During nail penetration, only the electrode material in the current path 18 that is penetrated by nail 22 contributes strongly to the current flowing at the nail penetration location. Due to a comparably small distance between two orifice lines 16, a sacrificial region 24 is formed which will melt during a nail penetration due to the high current flowing to the nail penetration area through this sacrificial region 24.

Current from neighboring current paths 18 experience a higher resistance in the current path towards the nail 22 due to the orifices 14 and are therefore redirected to the connecting area 20. As the sacrificial region 24 melts, these currents essentially do not contribute to the current flowing through the nail 22.

Instead, for example in case a fast discharge device is provided, such current is directed through the fast discharge device. Due to an appropriate design of the orifices 14, or orifice lines 16, respectively, the current towards the external current path, i.e. a fast discharge device, is not affected significantly. Hence, the ratio of current flowing around the nail and through the fast discharge device can be modified, which renders the fast discharge device more effectively. In the same way, also the DC resistance of the jelly roll or electrode stack, i.e. the resistance determining the power capability during ordinary cell operation, should not be affected by the slits in a significant way.

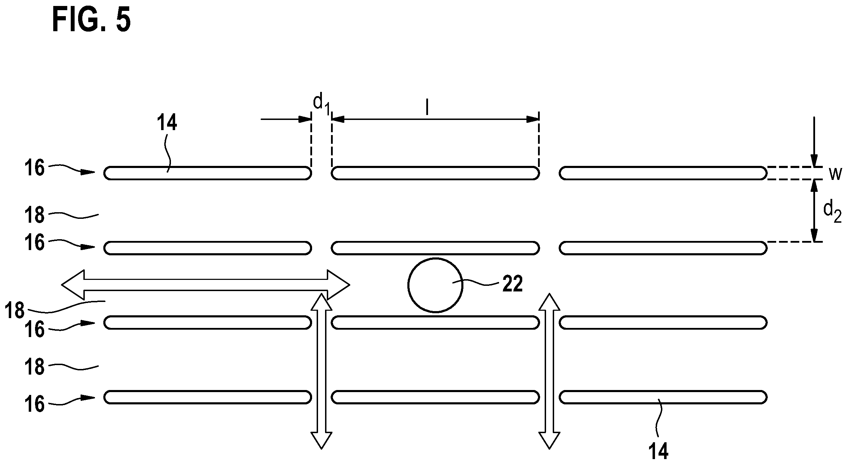

Exemplary dimensions of a current collector 10 are shown in figure 5. In detail, it is shown that the ratio of the length of an orifice I to the distance d₁ between two orifices 14 in one orifice string 16 lies in the range of equal or more than 50/1 to equal or less the 200/1. In detail, it may be provided that the distance d₁ between to orifices 14 in one orifice strings 16 lies at 0,2mm, wherein the length I of a respective orifice 14 may lie at 20mm. Alternatively, it may be provided that the distance d₁ between to orifices 14 in one orifice strings 16 lies at 0,4mm, wherein the length I of a respective orifice 14 may lie at 40mm. Further, the width w of an orifice 14 may lie at 0,2mm or 0,4mm and/or the distance d₂ between two orifice strings may lie at 6mm or 8mm.

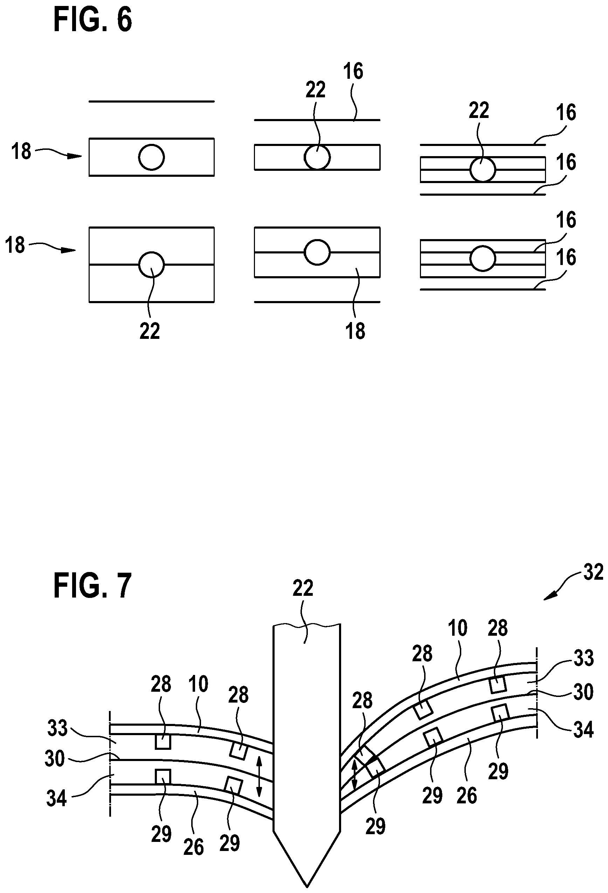

In figure 6, it is shown that comparably small distance d₂ between two orifice strings 16 may be advantageous as this may allow a comparably small portion if the current paths 18 to be destroyed and thus a comparably small current flowing to the nail penetration area. From the left part of figure 6 to the right part of figure 6, the distance d₂ between to orifice strings 16 decreases. It can be seen that in case a nail 22 penetrates at an orifice string 16, the less the distance d₂ is, the less area of current paths 16 is affected. Regarding the nail penetration test, it is thus advantageous in case the distance d₂ is less compared to the diameter of the nail 22.

In figure 7, an embodiment of a current collector 10, 26 which falls under the scope of the present invention as claimed in the appended claims is shown. According to figure 7, a battery cell 32 is shown which comprises two current collectors 10, 26, each of which being coated with a layer 33, 34 of active material and being separated by a separator 30, as it is generally known in the art for example for lithium-ion cells. One or both current collectors 10, 26 carries spacer elements 28, 29 which prevent a direct contact of the different current collectors 10, 26 in case a nail 22 is penetrated into the cell, like it is indicated by the arrows. According to figure 7, the spacer elements 28, 29 are arranged opposed to each other. However, it is as well possible that the spacer elements 28, 29 are arranged laterally shifted to each other.

## Claims

1. Current collector for a battery cell, the current collector (10, 26) comprising a main area (12) for connecting the current collector (10, 26) to a layer (33, 34) of active material, wherein a plurality of orifices (14) is provided in the main area (12), the orifices (14) being arranged in a plurality of orifice strings (16), wherein the orifice strings (16) define current paths (18) between them, wherein at least two orifice strings (16) proceed in a varying distance (d₂) to each other, **characterized in that** a plurality of electrically insulating spacer elements (28, 29) is provided attached to the current collector (10, 26), the plurality of spacer elements (28, 29) being positioned in the main area (12) of the current collector (10, 26).

2. Current collector according to claim 1, **characterized in that** the current collector (10, 26), next to the main area (12), comprises a connecting area (20), wherein the orifice strings (16) proceed in the direction to the connecting area (20).

3. Current collector according to claim 2, **characterized in that** the distance (d₂) between at least two orifice strings (16) continuously decreases in the direction to the connecting area (20).

4. Current collector according to any of claims 1 to 3, **characterized in that** each orifice string (16) comprises a plurality of orifices (14).

5. Current collector according to any of claims 1 to 4, **characterized in that** the ratio of the length (I) of an orifice (14) to the distance (d₁) between two orifices (14) in one orifice string (16) lies in the range of equal or more than 50/1 to equal or less the 200/1.

6. Current collector according any of claims 1 to 5, **characterized in that** the current collector (10, 26) is formed as a metal foil.

7. Current collector according to any of claims 1 to 6, **characterized in that** the main area (12) is completely provided with orifice strings (16) and that the connecting area (20) is free of orifices (14).

8. Battery cell, comprising at least one current collector (10, 26) according to any of claims 1 to 7.

9. Electrochemical energy storage device, comprising at least one of a current collector (10, 26) according to any of claims 1 to 7 and a battery cell (30) according to claim 8.

## Patentansprüche

1. Stromabnehmer für eine Batteriezelle, wobei der Stromabnehmer (10, 26) eine Hauptfläche (12) zum Verbinden des Stromabnehmers (10, 26) mit einer Schicht (33, 34) aktiven Materials umfasst, wobei mehrere Öffnungen (14) in der Hauptfläche (12) bereitgestellt ist, wobei die Öffnungen (14) in mehreren Öffnungssträngen (16) angeordnet sind, wobei die Öffnungsstränge (16) Strompfade (18) zwischen diesen definieren, wobei zumindest zwei Öffnungsstränge (16) in einem variierenden Abstand (d₂) voneinander fortlaufen, **dadurch gekennzeichnet, dass** mehrere elektrisch isolierende Abstandselemente (28, 29), befestigt an dem Stromabnehmer (10, 26), bereitgestellt sind, wobei die mehreren Abstandselemente (28, 29) in der Hauptfläche (12) des Stromabnehmers (10, 26) positioniert sind.

2. Stromabnehmer nach Anspruch 1, **dadurch gekennzeichnet, dass** der Stromabnehmer (10, 26), neben der Hauptfläche (12), eine Verbindungsfläche (20) umfasst, wobei die Öffnungsstränge (16) in der Richtung zur Verbindungsfläche (20) fortlaufen.

3. Stromabnehmer nach Anspruch 2, **dadurch gekennzeichnet, dass** der Abstand (d₂) zwischen zumindest zwei Öffnungssträngen (16) in der Richtung zur Verbindungsfläche (20) kontinuierlich abnimmt.

4. Stromabnehmer nach einem der Ansprüche 1 bis 3, **dadurch gekennzeichnet, dass** jeder Öffnungsstrang (16) mehrere Öffnungen (14) umfasst.

5. Stromabnehmer nach einem der Ansprüche 1 bis 4, **dadurch gekennzeichnet, dass** das Verhältnis der Länge (1) einer Öffnung (14) zum Abstand (d₁) zwischen zwei Öffnungen (14) in einem Öffnungsstrang (16) im Bereich von gleich oder mehr als 50/1 oder gleich oder weniger als 200/1 liegt.

6. Stromabnehmer nach einem der Ansprüche 1 bis 5, **dadurch gekennzeichnet, dass** der Stromabnehmer (10, 26) als eine Metallfolie ausgebildet ist.

7. Stromabnehmer nach einem der Ansprüche 1 bis 6, **dadurch gekennzeichnet, dass** die Hauptfläche (12) vollständig mit Öffnungssträngen (16) versehen ist und dass die Verbindungsfläche (20) frei von Öffnungen (14) ist.

8. Batteriezelle, umfassend zumindest einen Stromabnehmer (10, 26) nach einem der Ansprüche 1 bis 7.

9. Elektrochemische Energiespeichervorrichtung, umfassend den Stromabnehmer (10, 26) nach einem der Ansprüche 1 bis 7 und die Batteriezelle (30) nach Anspruch 8.

## Revendications

1. Collecteur de courant pour une cellule de batterie, le collecteur de courant (10, 26) comprenant une zone principale (12) destinée à raccorder le collecteur de courant (10, 26) à une couche (33, 34) de matériau actif, une pluralité d'orifices (14) étant pratiquée dans la zone principale (12), les orifices (14) étant disposés dans une pluralité de chaînes d'orifices (16), les chaînes d'orifices (16) définissant des chemins de courant (18) entre elles, au moins deux chaînes d'orifices (16) avançant à une distance variable (d₂) l'une de l'autre, **caractérisé en ce qu'**est prévue une pluralité d'éléments d'espacement électriquement isolants (28, 29) attachés au collecteur de courant (10, 26), la pluralité d'éléments d'espacement (28, 29) étant positionnée dans la zone principale (12) du collecteur de courant (10, 26).

2. Collecteur de courant selon la revendication 1, **caractérisé en ce que** le collecteur de courant (10, 26), à côté de la zone principale (12), comprend une zone de raccordement (20), les chaînes d'orifices (16) avançant dans la direction de la zone de raccordement (20) .

3. Collecteur de courant selon la revendication 2, **caractérisé en ce que** la distance (d₂) entre au moins deux chaînes d'orifices (16) diminue de façon continue dans la direction de la zone de raccordement (20).

4. Collecteur de courant selon l'une quelconque des revendications 1 à 3, **caractérisé en ce que** chaque chaîne d'orifices (16) comprend une pluralité d'orifices (14).

5. Collecteur de courant selon l'une quelconque des revendications 1 à 4, **caractérisé en ce que** le rapport entre la longueur (1) d'un orifice (14) et la distance (d₁) entre deux orifices (14) dans une chaîne d'orifices (16) se situe dans la gamme de 50/1 inclus à 200/1 inclus.

6. Collecteur de courant selon l'une quelconque des revendications 1 à 5, **caractérisé en ce que** le collecteur de courant (10, 26) est formé comme une feuille métallique.

7. Collecteur de courant selon l'une quelconque des revendications 1 à 6, **caractérisé en ce que** la zone principale (12) est entièrement pourvue de chaînes d'orifices (16) et **en ce que** la zone de raccordement (20) est dépourvue d'orifices (14).

8. Cellule de batterie, comprenant au moins un collecteur de courant (10, 26) selon l'une quelconque des revendications 1 à 7.

9. Dispositif de stockage d'énergie électrochimique, comprenant au moins un collecteur de courant (10, 26) selon l'une quelconque des revendications 1 à 7 et une cellule de batterie (30) selon la revendication 8.
